# EUROPEAN PATENT SPECIFICATION

(11) **EP 1 310 216 B1**
(45) Date of publication and mention of the grant of the patent: **22.10.2008**
(21) Application number: 02024662.5
(22) Date of filing: 05.11.2002
(51) Int. Cl.: A61C 3/06

(54) **Dental polishing device**
Zahnärztliche Poliervorrichtung
Instrument dentaire de polissage

(30) Priority: 09.11.2001 US 345396 P
(43) Date of publication of application: 14.05.2003
(73) Proprietor: DENTSPLY INTERNATIONAL, INC., York Pennsylvania 17405 (US)
(72) Inventor: Mcintire, Scott G., Camden, DE 19934 (US); Antonson, Sibel, Ft Lauderdale, FL 33328 (US)
(74) Representative: Hartz, Nikolai

(56) References cited:
- DE-U- 20 113 632
- US-A- 3 599 333
- US-A- 5 078 754
- US-A- 5 334 020
- US-A- 6 093 084
- US-A1- 2001 016 308

## Description

The invention relates to dental polishing device. More specifically the invention provides a dental polishing device having blocky synthetic diamonds effectively having particles size from 2 to 50 microns. Blocky synthetic diamonds as used herein are effectively free of rod shape synthetic diamonds and plate shape synthetic diamonds. Beneficially, the dental polishing device of the present invention provides a smoother surface in less time than prior art dental polishing systems, for example that disclosed in U.S. patent 5,078,754.

A further dental polishing device is known from U.S. patent 6,093,084.

### BREIF DESCRIPTION OF THE DRAWINGS

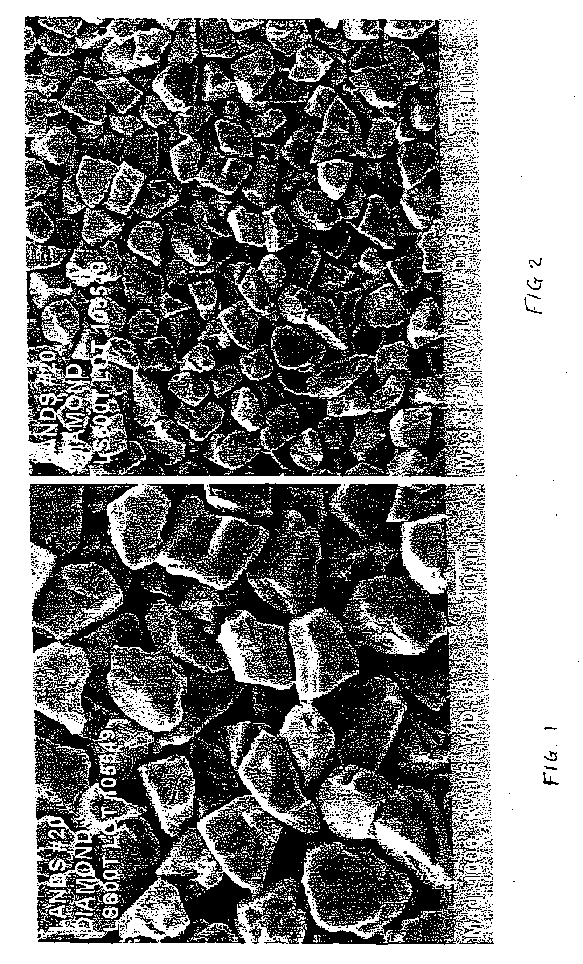

Figure 1 is a scanning electron micrograph at 1000 magnification of blocky synthetic diamond particles useful in dental polishing material of a dental polishing device of the invention.
Figure 2 is a scanning electron micrograph at 500 magnification of blocky synthetic diamond particles useful in dental polishing material of a dental polishing device of the invention.

### DETAILED DESCRIPTION OF THE INVENTION

The present invention provides a dental polishing device as defined by claim 1.

In accordance with the invention is provided a dental polishing device having a polishing member and a support member. The polishing member includes dental polishing material. The dental polishing material includes elastomeric polymer impregnated with blocky synthetic diamond particles. The blocky synthetic diamond particles are effectively uniformly distributed within the elastomeric polymer. The blocky synthetic diamond particles effectively have a mean particle size between 10 and 30 microns, and more preferably a mean particle size between 15 and 25 microns. The blocky synthetic diamond particles comprise more than 50 percent by weight of the dental polishing material. Preferably the blocky synthetic diamond particles comprise more than 60 percent by weight of the dental polishing material. More preferably the blocky synthetic diamond particles comprise more than 70 percent by weight of the dental polishing material.

Preferably the polishing member is disk or cup shaped. Preferably the support member is rod shaped.

Preferably the material is adapted to reduce the surface roughness of dental composite filling material by at least 50 percent within 30 seconds, when applied as a rotating disk under less than 50 psi pressure.

Preferably the blocky synthetic diamond particles consist essentially of blocky synthetic diamond particles having particle sizes from 2 to 50 microns. More preferably the blocky synthetic diamond particles effectively have particle sizes from 5 to 40 microns. Most preferably the blocky synthetic diamond particles consist essentially of particles effectively having particle sizes from 10 to 30 microns. Preferably the blocky synthetic diamond particles are not coated.

Blocky synthetic diamond powder particles for use in accordance with the invention preferably include from about 1 to about 8 ppm of nickel, from about 0.5 to about 6 ppm of lead, from about 5 to about 20 ppm of calcium, from about 1 to about 4 ppm of magnesium, from about 0.5 to about 1 ppm of zinc, from about 5 to about 40 ppm of iron, from about 4 to about 50 ppm of aluminum, from about 0.5 to about 5 ppm of chromium.

The following example is offered to aid in understanding the invention and is not to be construed as limiting its scope. Unless otherwise indicated, all parts and percentages are by weight.

### EXAMPLE 1

A polishing element is made by stirring 25.18 g urethane resin, 1.8 g silicon dioxide, 72.5 g synthetic diamond powder, 0.18 g silane ester, 0.128 g peroxide and 0.19 g dihydroxethyl-p-toluidine to form a polymerizable mixture. The urethane resin is the reaction product of a polyether polyol (Voranol 220-028) with a diisocyanate (trimethylhexamehtylene diisocyanate) using a tin catalyst and hydroxyethyl methacrylate (HEMA). The synthetic diamond powder is LS600T synthetic metal-bond crystal sold by LANDS SUPERABRASIVES CO. The synthetic diamond powder particles have consistent blocky shapes and particle sizes from 12 to 28 microns with more than 95 percent of the particles having particle sizes between 14 and 26 microns, and more than 75 percent of the particles having particle sizes between 18 and 22 microns.

The polymerizable mixture is poured into a mold to form a disk shape. A polymeric rod is positioned in the mold to be bonded to the disk. polymerizable mixture is cured at 23°C for 20 minutes. A 10 mm diameter polishing disk having a 2 mm center thickness and 0.7 mm rim thickness is removed from the mold.

It should be understood that while the present invention has been described in considerable detail with respect to certain specific embodiments thereof, it should not be considered limited to such embodiments but may be used in other ways without departure from the scope of the appended claims.

## Claims

1. A dental polishing device comprising: a polishing member and a support member, said polishing member comprising dental polishing material, said dental polishing material comprising elastomeric polymer impregnated with diamond particles, said diamond particles being blocky synthetic diamond particles effectively free of rod shape and plate shape synthetic diamonds and effectively having a mean particle size between 10 and 30 µm, said blocky synthetic diamond particles comprising more than 50 percent by weight of said dental polishing material.

2. The dental polishing device of claim 1 wherein said blocky synthetic diamond particles comprise more than 60 percent by weight of said dental polishing material.

3. The dental polishing device of claim 1 wherein said blocky synthetic diamond particles comprise more than 70 percent by weight of said dental polishing material.

4. The dental polishing device of claim 1 wherein said polishing member is disk shaped.

5. The dental polishing device of claim 1 wherein said polishing member is cup shaped.

6. The dental polishing device of claim 1 wherein said support member is rod shaped.

7. The dental polishing device of claim 1 wherein said blocky synthetic diamond particles effectively having particle sizes from 5 to 40 microns.

8. The dental polishing device of claim 1 wherein said blocky synthetic diamond particles consist essentially of particles effectively having particle sizes from 10 to 30 microns.

9. The dental polishing material of claim 1, wherein said blocky synthetic diamond particles comprise
from 1 to 8 ppm of nickel,
from 0.5 to 6 ppm of lead,
from 5 to 20 ppm of calcium,
from 1 to 4 ppm of magnesium,
from 0.5 to 1 ppm of zinc,
from 5 to 40 ppm of iron,
from 4 to 50 ppm of aluminum,
from 0.5 to 5 ppm of chromium.

10. The dental polishing device of claim 1 wherein said blocky synthetic diamond particles consist essentially of synthetic diamond particles having particle sizes from 2 to 50 microns, said synthetic diamond particles comprises more than 60 percent by weight of said dental polishing material.

11. The dental polishing device of claim 1 wherein said blocky synthetic diamond particles are not coated, and have particle sizes from 10 to 30 microns.

## Patentansprüche

1. Zahnärztliche Poliervorrichtung, umfassend: ein Polierelement und ein Tragelement, wobei das Polierelement Zahnpoliermaterial aufweist, und das Zahnpoliermaterial ein elastomeres Polymer umfasst, das mit Diamantteilchen imprägniert ist, wobei die Diamantteilchen stückige synthetische Diamantteilchen sind, die effektiv frei sind von stabförmigen und plattenförmigen synthetischen Diamanten und eine mittlere Teilchengröße zwischen 10 und 30 µm aufweisen, und die stückigen synthetischen Diamantteilchen mehr als 50 Gew.-% des Zahnpoliermaterials umfassen.

2. Zahnärztliche Poliervorrichtung nach Anspruch 1, worin die stückigen synthetischen Diamantteilchen mehr als 60 Gew.-% des Zahnpoliermaterials umfassen.

3. Zahnärztliche Poliervorrichtung nach Anspruch 1, worin die stückigen synthetischen Diamantteilchen mehr als 70 Gew.-% des Zahnpoliermaterials umfassen.

4. Zahnärztliche Poliervorrichtung nach Anspruch 1, worin das Polierelement scheibenförmig ist.

5. Zahnärztliche Poliervorrichtung nach Anspruch 1, worin das Polierelement tassenförmig ist.

6. Zahnärztliche Poliervorrichtung nach Anspruch 1, worin das Tragelement stabförmig ist.

7. Zahnärztliche Poliervorrichtung nach Anspruch 1, worin die stückigen synthetischen Diamantteilchen Teilchengrößen von 5 bis 40 µm aufweisen.

8. Zahnärztliche Poliervorrichtung nach Anspruch 1, worin die stückigen synthetischen Diamantteilchen im wesentlichen aus Teilchen bestehen, die Teilchengrößen von 10 bis 30 µm aufweisen.

9. Zahnpoliermaterial nach Anspruch 1, worin die stückigen synthetischen Diamantteilchen umfassen
1 bis 8 ppm Nickel,
0,5 bis 6 ppm Blei,
5 bis 20 ppm Calcium,
1 bis 4 ppm Magnesium,
0,5 bis 1 ppm Zink,
5 bis 40 ppm Eisen,
4 bis 50 ppm Aluminium,
0,5 bis 5 ppm Chrom.

10. Zahnärztliche Poliervorrichtung nach Anspruch 1, worin die stückigen synthetischen Diamantteilchen im wesentlichen aus synthetischen Diamantteilchen bestehen, die Teilchengrößen von 2 bis 50 µm aufweisen, wobei die synthetischen Diamantteilchen mehr als 60 Gew.-% des Zahnpoliermaterials umfassen.

11. Zahnärztliche Poliervorrichtung nach Anspruch 1, worin die stückigen synthetischen Diamantteilchen nicht beschichtet sind und Teilchengrößen von 10 bis 30 µm aufweisen.

## Revendications

1. Dispositif de polissage des dents comprenant : un élément de polissage et un élément de support, ledit élément de polissage comprenant un matériau de polissage des dents, ledit matériau de polissage des dents comprenant un polymère élastomère imprégné de particules de diamant, lesdites particules de diamant étant des particules de diamant synthétique polyédrique efficacement exemptes de diamants synthétiques en forme de tige et en forme de plaque et ayant efficacement une taille moyenne des particules entre 10 et 30 µm, lesdites particules de diamant synthétique polyédrique constituant plus de 50 % en poids dudit matériau de polissage des dents.

2. Dispositif de polissage des dents selon la revendication 1, dans lequel lesdites particules de diamant synthétique polyédrique constituent plus de 60 % en poids dudit matériau de polissage des dents.

3. Dispositif de polissage des dents selon la revendication 1, dans lequel lesdites particules de diamant synthétique polyédrique constituent plus de 70 % en poids dudit matériau de polissage des dents.

4. Dispositif de polissage des dents selon la revendication 1, dans lequel ledit élément de polissage est en forme de disque.

5. Dispositif de polissage des dents selon la revendication 1, dans lequel ledit élément de polissage est en forme de coupelle.

6. Dispositif de polissage des dents selon la revendication 1, dans lequel ledit élément de support est en forme de tige.

7. Dispositif de polissage des dents selon la revendication 1, dans lequel lesdites particules de diamant synthétique polyédrique ont efficacement des tailles de 5 à 40 micromètres.

8. Dispositif de polissage des dents selon la revendication 1, dans lequel lesdites particules de diamant synthétique polyédrique sont essentiellement constituées de particules ayant efficacement des tailles de 10 à 30 micromètres

9. Matériau de polissage des dents selon la revendication 1, dans lequel lesdites particules de diamant synthétique polyédrique comprennent
de 1 à 8 ppm de nickel,
de 0,5 à 6 ppm de plomb,
de 5 à 20 ppm de calcium,
de 1 à 4 ppm de magnésium,
de 0,5 à 1 ppm de zinc,
de 5 à 40 ppm de fer,
de 4 à 50 ppm d'aluminium,
de 0,5 à 5 ppm de chrome.

10. Dispositif de polissage des dents selon la revendication 1, dans lequel lesdites particules de diamant synthétique polyédrique sont essentiellement constituées de particules de diamant synthétique ayant des tailles de 2 à 50 micromètres, lesdites particules de diamant synthétique constituant plus de 60 % en poids dudit matériau de polissage des dents.

11. Dispositif de polissage des dents selon la revendication 1, dans lequel lesdites particules de diamant synthétique polyédrique ne sont pas revêtues et ont des tailles de 10 à 30 micromètres.
